# FASCICULE DE BREVET EUROPEEN

(11) **EP 2 319 239 B1**
(45) Date de publication et mention de la délivrance du brevet: **13.11.2019**
(21) Numéro de dépôt: 09737095.1
(22) Date de dépôt: 21.07.2009
(51) Int. Cl.: H04L 1/18, H04N 21/2383, H04L 1/00, H04N 21/24, H04N 21/438, H04N 21/442, H04N 21/6336, H04N 21/6543, H04N 21/658

(54) **PROCÉDÉ D'OPTIMISATION D'UN TEMPS DE ZAPPING SUR UN DÉCODEUR DE TÉLÉVISION NUMÉRIQUE**
VERFAHREN ZUM OPTIMIEREN DER ZAPPING-ZEIT EINES FERNSEH-DIGITALRECEIVERS
METHOD FOR OPTIMIZING THE ZAPPING TIME OF A TELEVISION DIGITAL SET TOP BOX

(30) Priorité: 01.08.2008 FR 0855343
(43) Date de publication de la demande: 11.05.2011
(73) Titulaire: SAGEMCOM BROADBAND SAS, 92500 Rueil-Malmaison (FR)
(72) Inventeur: LESSELLIER, Michel, F-92000 Nanterre (FR)
(74) Mandataire: Camus, Olivier Jean-Claude
(86) Numéro de dépôt international: PCT/FR2009/051453
(87) Numéro de publication internationale: WO 2010/012937

(56) Documents cités:
- WO-A-2007/120245
- WO-A-2008/048828
- US-A1- 2004 093 370
- US-A1- 2007 019 578
- US-A1- 2007 143 810

## Description

### DOMAINE TECHNIQUE DE L'INVENTION

La présente invention a pour objet un procédé d'optimisation d'un temps de zapping observé sur un décodeur de télévision numérique. L'invention a notamment pour but de proposer un procédé permettant de diminuer le temps de zapping de certains décodeurs numériques, sans pour autant provoquer de perte en terme de qualité d'image affichée par l'ensemble des décodeurs gérés par un opérateur.

Par temps de zapping, ou temps de changement de service, on désigne la durée qui s'écoule entre l'émission d'une commande de changement de service par un utilisateur d'un décodeur de télévision numérique, par exemple au moyen d'une télécommande appropriée, et l'affichage effectif du service désiré sur l'écran relié au décodeur considéré. Par service, on entend classiquement ce que les utilisateurs appellent une chaîne de télévision, par exemple une chaîne diffusant au cours de la journée des programmes successifs les uns aux autres. Néanmoins les services considérés peuvent être des services uniquement audio ou des services de données ou autres.

Le domaine de l'invention est, d'une façon générale, celui des décodeurs de télévision numérique. L'invention sera plus particulièrement décrite dans le cadre des décodeurs recevant un flux de signaux via le réseau Internet, décodeurs qui seront désignés par la suite comme décodeurs IP, mais la mise en œuvre du procédé selon l'invention n'est pas limitée à ce type de décodeurs.

US2007/019578 décrit un procédé d'optimisation de changement de service dans lequel le décodeur désactive au moins une fonction de contrôle d'intégrité lorsqu'il détermine que la qualité des services est satisfaisante. US2004/093370 décrit un système dans lequel le récepteur fait parvenir au serveur les résultats des mesures de qualité ainsi qu'un diagnostique du récepteur.

Dans le domaine de la télévision numérique, des décodeurs de télévision numérique sont utilisés, notamment afin d'accéder à un ensemble de chaînes de télévision qui sont transmises cryptées et qui sont décryptées au sein du décodeur. Les décodeurs de télévision sont des organes interfaces, associés à des dispositifs de type modem, entre des systèmes de transmission de signaux de télévision, notamment de signaux de télévision numérique au format MPEG et DVB, et des moniteurs de visualisation. Souvent, le moniteur comporte en lui-même des circuits de décodage de ces signaux de télévision mais ce n'est pas une obligation. Les signaux échangés sont le plus souvent des signaux numériques, mais un décodeur peut aussi avoir des facultés de traitement de signaux analogiques.

Les moyens de transmission qui transmettent les émissions de télévision à ces décodeurs/récepteurs sont soit des moyens de transmission aériens classiques, soit des câbles coaxiaux, voire optiques, soit des satellites de réemission qui desservent une région, soit encore le réseau Internet. Le décodeur comporte des moyens de réception pour recevoir les signaux émis et des moyens de formatage pour transformer les signaux reçus en des signaux applicables directement sur les organes de commande du dispositif de visualisation. Pour un tube cathodique il s'agit par exemple des commandes appliquées sur les organes de balayage et sur les différents canons à électrons produisant des pixels de couleur sur l'écran.

Le formatage se réalise en respectant pour chacune des images à représenter des tables de paramètres. On distingue différents types de tables : les tables SI (Information Système), les tables PSI (Informations Spécifiques de Programmes), les tables NIT (Tables d'Information de Réseau), les tables EIT (Tables d'Evénements), les tables PAT (Table des Programmes Associés), la table CAT (Table de Contrôle d'Accès) ou encore les tables PMT (Table des Composants des Programmes)...

Dans la télévision numérique, il est prévu que les signaux de paramètres soient transmis dans le flux (c'est à dire avec le signal vidéo lui-même) dans des paquets de données. Les paquets de données transmis sont arrangés en sections, les sections comportant classiquement 1024 octets ou, dans certains cas, 4096 octets. Une fois reçus, les différents paquets sont attribués aux tables appropriées. Les paquets d'une même table ne sont pas nécessairement groupés dans une même section. Ils peuvent être répartis dans des sections successives, entrelacées avec des paquets d'informations relatifs à d'autres tables ou au signal vidéo, audio, de données ou autre. Dans chaque section, des identifiants permettent d'attribuer les paquets de données à des tables particulières parmi d'autres. En réception, un décodeur ne sait pas au premier abord comment sont répartis les paquets de données mais il peut reconnaître un découpage des sections. Le décodeur doit donc lire l'identifiant dans chaque section et réorganiser les données pour les affecter aux bonnes tables. Tous les signaux de paramètres relatifs aux différentes tables sont édités par les opérateurs de télévision ou les gestionnaires de média de transport, sont incorporés dans le flux de cet opérateur, et sont acheminés vers les utilisateurs par les différents médias.

En définitive, toute une architecture de tables est ainsi distribuée, en particulier selon la norme EN 300 468 et le but du décodeur est de reconstruire toutes les tables pour disposer des informations de réglage ainsi que des informations à montrer en visualisation pour les utilisateurs.

Dans chaque flux de signaux multiplexés émis, quel que soit le support physique utilisé, une table dite PAT, Program Association Table, est diffusée. Cette table, qui est une table PSI définie dans la norme ISO/IEC 13818-1, donne la liste des services disponibles dans le flux de signaux multiplexés considéré ; elle-même donne ainsi la liste des tables PMT, Program Map Table, (table PSI définie dans la norme ISO/IEC 13818-1), qui sont associées à chacun des services, et qui définit, pour chaque service, la liste des composantes associées à ce service.

Pour chaque service, on trouve dans la table PMT notamment une information de contrôle d'accès associée à ce service. La table CAT de contrôle d'accès permet de prélever cette information et fait exécuter la transmission de cette information vers un microprocesseur du décodeur, ce dernier pouvant alors déterminer si l'utilisateur du décodeur a les droits sur ce service. Si c'est le cas, le microprocesseur renvoie une information appropriée qui permet d'obtenir une clé numérique de décryptage du service considéré. Ce dernier peut alors être restitué en clair sur un écran de visualisation.

La norme MPEG2 permet de multiplexer plusieurs services dans un même Transport Stream (TS) ou canal. Cette norme est complétée par la norme DVB qui permet la constitution et le changement de service, ou zapping sur plusieurs flux de signaux multiplexés au sein d'un même et unique réseau.

### ARRIERE-PLAN TECHNOLOGIQUE DE L'INVENTION

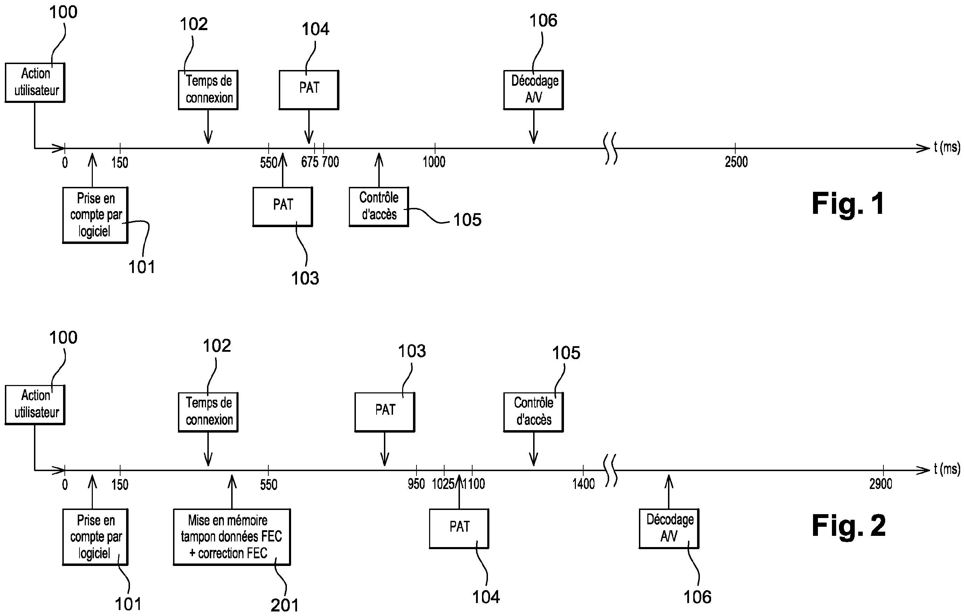

Dans l'état de la technique, une opération de zapping sur un décodeur IP suit les différentes étapes montrées sur le chronogramme de la figure 1. Sur cette figure, on repère l'instant initial (t=0) comme étant l'instant où un utilisateur réalise une action 100 pour effectuer un changement de service. Une telle action est le plus souvent constituée par l'appui sur une ou plusieurs touches appropriées d'une télécommande associée au décodeur. L'écoulement du temps de zapping est repéré par rapport à cette référence temporelle.

Une première étape 101 réside alors dans la prise en compte, par le logiciel de fonctionnement du décodeur IP, de l'action de l'utilisateur. La durée de cette étape est typiquement de 150 ms (millisecondes). Cette durée est utilisée notamment pour que le logiciel de fonctionnement décharge une application spécifique pour le zapping, éventuellement pour un échange avec un serveur distant pour obtenir différentes requêtes, et également pour vérifier que l'utilisateur ne communique pas, pendant cet intervalle de temps, une instruction annulant la commande de zapping initialement reçue.

Suit alors une deuxième étape 102, au cours de laquelle le décodeur IP exécute une commande dite "commande IGMP join". La durée de cette étape est voisine de 400 ms ; elle correspond à un temps de connexion du décodeur, temps nécessaire, à partir de l'exécution de la commande IGMP join, pour recevoir des premiers paquets de données appropriés extraits d'un flux de signaux multicastés. Dans le cas des décodeurs terrestres, satellites ou câbles, le temps de connexion du décodeur correspond du temps qui s'écoule entre un agissement sur le tuner du décodeur, et la réception effective des premiers paquets de données.

Une opération de mise en mémoire tampon des données reçues dans le flux, avec un démultiplexage des différentes composantes est alors réalisée. Une telle opération prend cependant un temps négligeable du fait de la réalisation en dur (hardware en langue anglaise) des différents composants intervenant.

On procède ensuite à l'acquisition des différentes tables et paramètres nécessaires pour réaliser l'opération de zapping :
Ainsi, une étape suivante 103, qui dure typiquement 75 ms, est une étape d'acquisition de la table PAT.
Puis, une étape 104 suit, d'une durée moyenne de 75 ms, dans laquelle la table PMT est acquise.
Ensuite, dans une étape suivante 105, le contrôle d'accès est effectué; celui-ci dure environ 300 ms, et consiste essentiellement en : - une analyse des descripteurs de la table PMT (principalement le descripteur identifié CA_descriptor - tag : 0x09) ; - puis en la pose de filtres au niveau d'un démultiplexeur du décodeur pour recevoir les ECM (Entitlement Control Message en langue anglaise, défini dans la norme ISO/IEC 13818-1) ; - puis en un dialogue avec la carte à puce du décodeur pour définir si l'utilisateur a les droits sur le service désiré ; - le cas échéant, en un décryptage des ECM en mots de contrôle CW (Control Word en langue anglaise) ; les mots de contrôle seront alors fournis au décrypteur (descrambler en langue anglaise) pour accéder en clair aux différentes composantes du service désiré.
Une fois les différents paramètres et tables acquis, on procède, dans une étape suivante 106, à l'opération de décodage audio et vidéo pour le service désiré. Le temps pris entre la communication des données audio et vidéo au décodeur audio et vidéo du décodeur IP et l'affichage effectif sur l'écran de visualisation est de l'ordre de 1500 ms.

Ainsi, pour procéder à une opération de zapping dans les décodeurs IP de l'état de la technique, une durée voisine de 2500 ms est requise.

Les flux de signaux transmis aux décodeurs IP transitent par des équipements de type DSLAM, ou portails de l'opérateur. Le flux est alors directement envoyé vers les différents décodeurs IP, avec une atténuation progressive du signal utile. Plus un utilisateur de décodeur IP se situe loin du DSLAM qui lui fournit le flux de signaux, plus le rapport signal/bruit est important, et plus le risque d'erreur dans la reconstitution des signaux audio-vidéo est grand. En conséquence, afin d'augmenter le nombre d'utilisateurs susceptibles d'être accessibles à partir d'un DSLAM donné sans que le signal soit bruité de manière prohibitive, on a récemment proposé l'utilisation de systèmes de protection avancés contre les erreurs susceptibles de se produire lors de la transmission de données. Ces systèmes de protection avancée, ou de correction, permettent également de corriger les erreurs dans les transmissions de paquet dues à des dysfonctionnements qui peuvent avoir différentes origines. Un des systèmes de correction les plus connus est le contrôle de type CRC.

Le système FEC (pour Forward Error Correction en langue anglaise) a été choisi dans le cadre des diffusions multicast qui viennent d'être mentionnées. A l'avenir, d'autres systèmes pourront éventuellement être choisis, sans remettre pour autant en cause le fonctionnement du procédé selon l'invention. Dans la mise en œuvre du système FEC, l'émetteur ajoute de la redondance afin de permettre au destinataire, le décodeur IP dans le cas présent, de détecter et de corriger une partie des erreurs qui auraient pu se produire. En outre, un tel système, même s'il nécessite de la redondance d'informations, permet d'éviter la retransmission, et donc de faire des économies de bande passante. Cependant, dans des systèmes de diffusion de type monocast, utilisés notamment dans des applications de type vidéo à la demande, un système de protection de type retransmission peut être utilisé ; le principe d'un tel système de retransmission consiste en la réémission des paquets erronés ou perdus, suite à l'émission d'une requête appropriée émise par le modem ou par le décodeur. Le procédé selon l'invention trouve également une application lorsque de tels systèmes de protection sont utilisés.

De manière générale, on peut considérer le fonctionnement du système FEC comme suit : le flux de signaux reçus par le décodeur IP est constitué d'ne pluralité de composantes multiplexées. Le système FEC répartit notamment les composantes audio et vidéo dans différents ensembles de données, au moins un premier ensemble de données et un deuxième ensemble de données, qui sont chacun organisés sous la forme de matrices, respectivement une première matrice et une deuxième matrice de données audio et vidéo. A chaque ligne ou colonne de la matrice correspond une donnée redondante de correction : si une des données audio-vidéo d'une colonne a été entachée d'une erreur, alors la donnée considérée peut être corrigée à partir de la donnée de correction associée à la colonne considérée, et des données non corrompues de la même colonne.

A la figure 2, on a représenté un exemple de mise en œuvre d'une opération de zapping sur un flux de signaux dans lequel le système de correction FEC est mis en place. Les deux premières étapes de l'opération de zapping de cet exemple sont identiques aux deux étapes de l'exemple illustré à la figure 1. A l'issue de l'étape 102, marquée par un temps de connexion de l'ordre de 400 ms, on procède, dans une étape 201, à la mise en mémoire tampon d'au moins un premier ensemble de données et d'un deuxième ensemble de données, puis à la correction des composantes audio-vidéo ainsi mémorisées.

Dans le système FEC, les données de correction du premier ensemble de données sont transmises avec les données du deuxième ensemble de données. On limite ainsi les risques d'erreur non corrigeable en espaçant dans le temps les données audio-vidéo et les données de correction susceptibles d'être utilisées pour corriger les données audio-vidéo considérées. Une contrepartie d'un tel fonctionnement est qu'il est nécessaire de mémoriser au moins deux matrices, soit deux ensembles de données, avant de pouvoir entamer les opérations de correction du système FEC. Ainsi, en considérant un flux de signaux de type flux SD (Simple Définition) à 2,2 Mbits/s, et une taille de matrice de 8 colonnes sur 5 lignes, le temps de mise en mémoire tampon et de mise en œuvre de la correction est voisin de 400 ms.

L'étape 201 s'achève ainsi, avec l'obtention de composantes audio-vidéo corrigées, environ 950 ms après l'action de l'utilisateur pour réaliser un changement de service. L'étape 201 est cruciale pour proposer une bonne qualité audio-vidéo car, contrairement aux composantes de fonctionnement, toute perte de donnée audio-vidéo risque de créer des défauts visuels, de type macro-bloc, images figées ou saccadées, écran noir...A l'issue des l'étape 201, les étapes 103, 104, 105 et 106, détaillées lors de la description du premier exemple de mise en œuvre, sont reprises.

Dans un tel exemple, l'opération de zapping est donc de l'ordre de 2900 ms ; on constate donc une augmentation importante de l'ordre de 20% du temps de zapping.

Afin d'améliorer la qualité de service chez un client, de plus en plus d'opérations de contrôle sont donc effectués, par des systèmes de correction avancée, au niveau du décodeur lors de la réception de paquets vidéo, notamment les paquets vidéo reçus via le réseau Internet. Les opérations de contrôle permettent notamment d'éviter des inconvénients de type perte de services (lorsqu'un un service n'est plus du tout disponible), ou de type dégradation de services (du fait du caractère erroné ou perdu de certains paquets) qui peut par exemple se traduire par un effet de pixellisation sur les images vidéo.

Si ces opérations de contrôle sont nécessaires et efficaces lorsque les paquets transitent via des lignes de transmission sujettes à des perturbations - par exemple des lignes dans les logements collectifs où les câbles de transmission sont souvent présents dans les cages d'ascenseurs, dont les opérations de démarrage, de par l'impulsion électromagnétique qu'ils produisent, créent des interférences sur les liaisons considérées, et endommagent ainsi les paquets de données - , elles sont inutiles lorsque la qualité de la liaison, entre un portail d'un opérateur considéré et le modem associé au décodeur cible, est de bonne qualité.

Ainsi, un utilisateur qui a la chance de bénéficier d'une liaison de bonne qualité entre un portail de son opérateur et son décodeur ne tire aucun bénéfice de la mise en œuvre des opérations de contrôle, notamment des opérations de contrôle qui ont été mentionnées ; au-delà de ne pas bénéficier d'amélioration de qualité dans les images reçues, la mise en œuvre des opérations de contrôle a au moins, pour ces utilisateurs, une conséquence néfaste, comme expliquée précédemment dans le cas du FEC : l'augmentation du temps de zapping.

Par ailleurs, le temps de zapping est un paramètre important dans l'appréciation de la qualité des services fournis par un opérateur, qualité évaluée régulièrement par un organisme important. Il convient donc de soigner cette caractéristique des décodeurs, caractéristique directement appréciable par l'utilisateur final.

### DESCRIPTION GENERALE DE L'INVENTION

Le procédé selon l'invention propose une solution aux problèmes et inconvénients qui viennent d'être exposés. Dans l'invention, on propose une solution pour ne pas handicaper les utilisateurs bénéficiant d'une liaison de bonne qualité entre le portail de leur opérateur et leur moyen de réception, de type modem par la présence inutile de systèmes de correction efficaces uniquement sur les liaisons de moins bonne qualité. A cet effet, dans l'invention, on propose de tester la qualité desdites liaisons, et, en fonction de la qualité déterminée, de désactiver ou non la mise en œuvre de certains des mécanismes de correction.

L'invention concerne donc essentiellement un procédé d'optimisation d'un temps de changement de services observé sur un décodeur de télévision numérique, ledit décodeur de télévision numérique étant relié, via un élément de type modem, à un portail d'un opérateur de télévision par une liaison de communication transportant des paquets de données, caractérisé en ce que le procédé comporte les différentes étapes consistant à :
- déterminer la qualité de la liaison reliée au décodeur ;
- si la qualité déterminée de la liaison considérée est satisfaisante, désactiver, au sein du décodeur de télévision, au moins une fonction de contrôle d'intégrité de transmission, par une opération consistant à émettre une commande de désactivation depuis le portail considéré de l'opérateur vers une application spécifique du décodeur.

Le procédé selon l'invention peut comporter, en plus des étapes principales qui viennent d'être mentionnées dans le paragraphe précédent, une ou plusieurs caractéristiques supplémentaires parmi les suivantes:
- la au moins une fonction de contrôle d'intégrité de transmission désactivée est une fonction associée à la mise en œuvre du système FEC ;
- la au moins une fonction de contrôle d'intégrité désactivée est une fonction associée à un mécanisme de retransmission, ou une fonction associée au système de correction par CRC ;
- l'étape de détermination de la qualité de la liaison reliée au décodeur comporte les différentes opérations consistant à :
   - relever au moins un paramètre de qualité de service mémorisé dans le modem ou dans le décodeur ;
   - comparer le au moins un paramètre à une valeur seuil de référence ;
   - si le au moins un paramètre de qualité de service est supérieur à ladite valeur seuil de référence, désactiver la au moins une fonction de contrôle d'intégrité de transmission.
- le au moins un paramètre de qualité de service est un paramètre parmi les paramètres suivants :
   - taux de perte de paquets ;
   - indicateur de bande passante ;
   - indicateur de qualité de débit ;
   - indicateur de discontinuité dans la réception des paquets de données ;
   - indicateur du nombre de paquets corrigés et/ou non corrigés pendant une durée préalablement déterminée ;
   - indicateur du nombre de passage du décodeur dans un mode de fonctionnement dégradé, pendant une durée préalablement déterminée ;
   - indicateur du temps passé en veille par le décodeur ;
   - indicateur du nombre de réinitialisation du décodeur.
- l'étape de détermination de la qualité de la liaison considérée est mise en œuvre à chaque sortie de veille du décodeur.
- l'étape de détermination de la qualité de la liaison considérée est mise en œuvre périodiquement.
- le procédé comporte les étapes supplémentaires consistant à :
   - mesurer une durée de désactivation de la au moins une fonction de contrôle d'intégrité ;
   - comparer la durée mesurée à une durée seuil ;
   - si la durée mesurée est supérieure à la durée seuil, activer de nouveau, au sein du décodeur, la au moins une fonction de contrôle d'intégrité.
- la durée de désactivation mesurée est la durée écoulée depuis la dernière réception, par le décodeur, de la commande de désactivation.
- le procédé est mis en œuvre dans des décodeurs de type décodeur IP.

Les différentes caractéristiques supplémentaires du procédé selon l'invention, dans la mesure où elles ne s'excluent pas mutuellement, sont combinées selon toutes les possibilités d'association pour aboutir à différents exemples de mise en œuvre de l'invention.

La présente invention se rapporte également à un décodeur de télévision numérique apte à mettre en œuvre le procédé selon l'invention, avec ses caractéristiques principales, et éventuellement une ou plusieurs caractéristiques supplémentaires qui viennent d'être mentionnées.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention. Les figures montrent :
- à la figure 1, déjà décrite, un chronogramme illustrant le déroulement d'une séquence de zapping pour un décodeur de télévision numérique recevant un flux de signaux classique via le réseau Internet ;
- à la figure 2, également déjà décrite, un chronogramme illustrant le déroulement, dans l'état de la technique, d'une séquence de zapping pour un décodeur de télévision numérique recevant un flux de signaux obéissant au système FEC via le réseau Internet ;
- à la figure 3, une représentation schématique du fonctionnement d'un réseau de télévision numérique permettant la mise en œuvre d'un exemple du procédé selon l'invention.

### DESCRIPTION DES FORMES DE REALISATION PREFEREES DE L'INVENTION

Les différents éléments apparaissant sur plusieurs figures auront gardé, sauf précision contraire, la même référence.

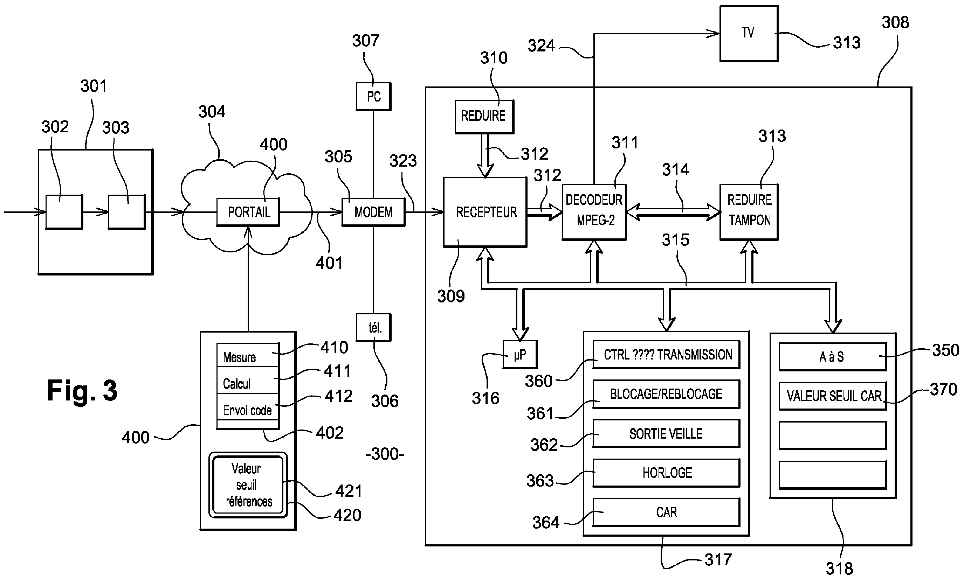

La figure 3 représente une architecture 300 utilisant un dispositif de type décodeur 308 selon l'invention.

L'architecture 300 comporte en outre, dans cet exemple de réalisation consistant en un exemple classique d'utilisation d'un décodeur :
- un téléviseur 319, un téléphone 306 et un micro-ordinateur 307,
- un modem 305,
- un réseau 304 du type Internet,
- une source distante 301 de données audio vidéo telle qu'un serveur distant.

Le modem 305 est un modem du type ADSL (« Asymmetric Digital Subscriber Line » en anglais) « triple play » offrant à l'utilisateur l'accès aux trois services que sont la télévision ou la vidéo à la demande VoD via la télévision 319, la téléphonie via le téléphone 306 et Internet via le micro-ordinateur 307.

Le serveur 301 comporte notamment un encodeur 302 et un dispositif d'encapsulation 303. Les paquets de données émis par le serveur 301 sont reçus par le modem 305 via un portail 400. Une liaison de communication 401, relie le portail 400 au modem 305.

L'accès aux chaines de télévision ou à la VoD nécessite l'utilisation du décodeur 308 dont la fonction primaire est de décoder le flux de données vidéo compressées, par exemple au format MPEG 2. A cet effet, un récepteur de données numériques 309 du décodeur 308 et le modem 305 sont reliés par un câble Ethernet 323. On notera que cette liaison pourrait également être une liaison WiFi ou WiMAX.

Dans l'exemple représenté, le décodeur 308 comporte :
- une mémoire tampon réseau 310
- un microprocesseur 316 commandé par des programmes situés dans une mémoire de programmes 317,
- une mémoire de données 318,
- des bus 312, 314, 315 d'adresses de données et de commandes permettant aux différents éléments du décodeur 308 d'être reliés entre eux et permettant aussi au microprocesseur 316 de pouvoir communiquer avec ces éléments afin de les gérer,
- un dispositif décodeur de données du type MPEG-2 311 ;
- une mémoire tampon AV 313.

Le décodeur 308 reçoit via le récepteur de données numériques 309 des paquets de données compressées qui sont transmises à la mémoire tampon réseau 310 puis au décodeur MPEG-2 311 pour être restituées au téléviseur 319 via une connexion péritel 324.

La mémoire de données 318 est notamment destinée à mémoriser différentes informations, valeurs ou paramètres nécessaires au fonctionnement du décodeur 308. La mémoire de données comporte ainsi notamment des indicateurs de QoS (Qualité de Service) à valeur variable qui peuvent être par exemple :
- un taux de perte de paquets ;
- un indicateur de bande passante ;
- un indicateur de qualité de débit ;
- un indicateur de discontinuité dans la réception des paquets de données ;
- un indicateur du nombre de paquets corrigés et/ou non corrigés pendant une durée préalablement déterminée ;
- un indicateur du nombre de passage du décodeur dans un mode de fonctionnement dégradé, pendant une durée préalablement déterminée ;
- un indicateur du temps passé en veille par le décodeur ;
- un indicateur de rendu audiovisuel ;
- un indicateur du nombre de réinitialisation du décodeur.

Dans d'autres exemples de réalisation, certains de ces indicateurs peuvent être mémorisés dans une mémoire de données, non représentée, du modem 305.

Par exemple, le taux de perte de paquet correspond, exprimé en pourcentage, au nombre de paquets de données non délivrés, la plupart du temps du fait d'un encombrement du réseau.

Concernant l'indicateur de rendu audiovisuel, au niveau du décodeur MPEG-2 311, il y a principalement deux cas d'erreurs liés au taux de remplissage de la mémoire tampon AV 313:
- erreur du type « sous-remplissage » (« under-flow » en anglais) : le décodeur MPEG-2 311 consomme les données plus rapidement que ces dernières arrivent. Si le décodeur MPEG-2 311 n'a plus de données, il ne peut plus décompresser les images suivantes et dans ce cas la dernière image qui a pu être décompressée reste figée sur l'écran du téléviseur 319.
- erreur du type « débordement » (« over-flow » en anglais) : les données arrivent plus rapidement que le décodeur MPEG-2 311 ne peut les consommer : la mémoire tampon AV 313 déborde. Des perturbations seront donc visibles sur l'écran du téléviseur 319.

La mémoire de programmes 317 est notamment destinée à la gestion des différentes opérations à exécuter pour mettre en œuvre différentes fonctionnalités du décodeur 308. Elle comporte plusieurs moyens logiciels (i.e. applications) dont certains sont dédiés à la mise en œuvre de l'invention. Dans d'autres exemples de réalisation du décodeur 308, ces moyens logiciels pourraient être remplacés par des circuits électroniques spécifiques.

Un exemple de mise en œuvre du procédé selon l'invention est à présent décrit.

Dans l'exemple décrit, une étape essentielle consiste en la détermination de la qualité de la liaison de communication, également appelée liaison de transmission, 401.

A cet effet, on prévoit par exemple de faire relever, par le portail 400 ou éventuellement directement par le serveur 301, au moins un paramètre de type indicateur de qualité de service, notamment un des paramètres mentionnés précédemment ; à cet effet, on a préalablement mémorisé ces paramètres dans une zone de mémoire spécifique 350 de la mémoire de données 318. Afin de prélever ce ou ces paramètres, on utilise une application particulière, dite application de mesure 410, d'une mémoire de programmes 402 du portail 400.

L'application de mesure 410 coopère, à partir des paramètres relevés, avec une application 411 de la mémoire de programmes 402, dite application de calcul, pour déterminer une valeur finale à partir du paramètre, ou des paramètres mesurés, chaque paramètre mesuré pouvant être pondéré par un coefficient préalablement déterminé. La valeur finale est alors comparée à une valeur seuil de référence 421, préalablement déterminée et mémorisée dans une mémoire de données 420 du portail 400 ou du serveur 301.

Dans l'hypothèse où la valeur finale est supérieure à la valeur seuil de référence, on considère que la ligne de transmission 401 est une ligne de bonne qualité. Dans ce cas de figure, on provoque la désactivation d'une application 360 de la mémoire de programmes 317, dite application de contrôle d'intégrité de transmission. La désactivation de cette application entraîne l'annulation de la mise en œuvre d'au moins un système de protection avancée, de type système FEC, système de retransmission, ou éventuellement système correctif de type CRC.

Dans l'exemple décrit ici, la désactivation de cette fonction est obtenue par l'émission d'une commande appropriée, dite commande de désactivation, émise par le portail 400 par une application 412 de la mémoire de programmes 402, dite application d'envoi de commande de désactivation ; cette commande est reçue par une application 361 de la mémoire de programmes 317, dite application de blocage/déblocage de l'application 360 de contrôle d'intégrité de transmission.

Selon les modes de mise en œuvre envisagés pour l'invention, on procède à l'activation de l'application de mesure 410 soit à chaque sortie de veille du décodeur 308, soit périodiquement.

Dans le premier cas, une application 362 de la mémoire de programmes 317, dite application de sortie de veille, détecte chaque sortie de veille du décodeur, et transmet une commande appropriée à l'application de mesure 410 pour que cette dernière se déclenche.

Dans le deuxième cas, une application 363 de la mémoire de programmes 317, de type horloge, est utilisée pour transmettre périodiquement la commande appropriée à l'application de mesure 410 pour que cette dernière se déclenche.

Dans un mode de mise en œuvre avantageux, on prévoit, par mesure de sécurité, de réactiver automatiquement les systèmes de protection avancée qui ont pu être désactivés par la mise en œuvre du procédé selon l'invention. On peut ainsi par exemple utiliser une application d'une application 364 de la mémoire de programmes 317, de type compte à rebours, qui se déclenche dès la réception d'une première, ou d'une nouvelle, commande de désactivation. Lorsque le compte à rebours atteint une valeur seuil 370 préalablement déterminée et mémorisée dans la mémoire de données 318, l'application 361 de blocage/déblocage est activée pour réactiver les systèmes de protection avancés précédemment désactivés. Dans d'autres exemples de mise en œuvre, l'application de type compte à rebours est installée dans le portail 400, ou dans le serveur 301.

Bien entendu, l'invention n'est pas limitée au mode de réalisation qui vient d'être décrit.

Ainsi, le décodeur selon l'invention comporte notamment des moyens pour mettre en œuvre le procédé selon l'invention, et notamment une mémoire de programmes avec une première application pour effectuer les activer et/ou désactiver les systèmes de correction avancées.

## Revendications

1. Procédé d'optimisation d'un temps de changement de services observé sur un décodeur de télévision numérique (308), ledit décodeur de télévision numérique étant relié, via un élément de type modem (305), à un portail (400) d'un opérateur de télévision par une liaison de communication (401) transportant des paquets de données, **caractérisé en ce que** le procédé comporte les différentes étapes consistant à :
- déterminer (410) la qualité de la liaison (401) reliée au décodeur (308) ;
- si la qualité déterminée de la liaison considérée est satisfaisante, désactiver (361), au sein du décodeur (308) de télévision, au moins une fonction (360) de contrôle d'intégrité de transmission, par une opération consistant à émettre (412) une commande de désactivation depuis le portail (400) considéré de l'opérateur vers une application (361) spécifique du décodeur (308).

2. Procédé selon la revendication précédente **caractérisé en ce que** la au moins une fonction (360) de contrôle d'intégrité de transmission désactivée est une fonction associée à la mise en œuvre du système FEC.

3. Procédé selon l'une au moins des revendications précédentes **caractérisé en ce que** la au moins une fonction (360) de contrôle d'intégrité désactivée est une fonction associée à un mécanisme de retransmission, ou une fonction associée au système de correction par CRC.

4. Procédé selon l'une au moins des revendications précédentes **caractérisé en ce que** l'étape de détermination de la qualité de la liaison (401) reliée au décodeur (308) comporte les différentes opérations consistant à :
- relever au moins un paramètre de qualité de service (350) mémorisé dans le modem (305) ou dans le décodeur (308) ;
- comparer (411) le au moins un paramètre de qualité de service (350) à une valeur seuil de référence (421) ;
- si le au moins un paramètre de qualité de service (350) est supérieur à ladite valeur seuil de référence (421), désactiver (361) la au moins une fonction (360) de contrôle d'intégrité de transmission.

5. Procédé selon la revendication précédente **caractérisé en ce que** le au moins un paramètre de qualité de service (350) est un paramètre parmi les paramètres suivants :
- taux de perte de paquets ;
- indicateur de bande passante ;
- indicateur de qualité de débit ;
- indicateur de rendu audiovisuel ;
- indicateur de discontinuité dans la réception des paquets de données ;
- indicateur du nombre de paquets corrigés et/ou non corrigés pendant une durée préalablement déterminée ;
- indicateur du nombre de passage du décodeur dans un mode de fonctionnement dégradé, pendant une durée préalablement déterminée ;
- indicateur du temps passé en veille par le décodeur ;
- indicateur du nombre de réinitialisation du décodeur.

6. Procédé selon l'une au moins des revendications précédentes **caractérisé en ce que** l'étape de détermination (410) de la qualité de la liaison (401) considérée est mise en œuvre à chaque sortie de veille du décodeur (308).

7. Procédé selon l'une au moins des revendications 1 à 5 **caractérisé en ce que** l'étape de détermination (410) de la qualité de la liaison (401) considérée est mise en œuvre périodiquement.

8. Procédé selon l'une au moins des revendications précédentes **caractérisé en ce qu'**il comporte les étapes supplémentaires consistant à :
- mesurer (364) une durée de désactivation de la au moins une fonction de contrôle d'intégrité ;
- comparer la durée mesurée à une durée seuil (370) ;
- si la durée mesurée est supérieure à la durée seuil (370), activer (361) de nouveau, au sein du décodeur, la au moins une fonction (360) de contrôle d'intégrité.

9. Procédé selon la revendication 8 **caractérisé en ce que** la durée de désactivation mesurée est la durée écoulée depuis la dernière réception, par le décodeur (308), de la commande de désactivation.

10. Procédé selon l'une au moins des revendications précédentes **caractérisé en ce qu'**il est mis en œuvre dans des décodeurs (308) de type décodeurIP.

11. Produit programme d'ordinateur comprenant des instructions pour mettre en œuvre un procédé selon l'une des revendications 1 à 10, lorsqu'il est exécuté par un ordinateur.

12. Support d'enregistrement lisible par un ordinateur lisible par ordinateur, sur lequel est enregistré le produit programme d'ordinateur selon la revendication 11.

## Patentansprüche

1. Optimierungsverfahren einer Änderungszeit von Leistungen, die auf einem digitalen Fernsehdekodierer (308) beobachtet werden, wobei der genannte digitale Fernsehdekodierer über ein Element vom Typ Modem (305) mit einem Portal (400) eines Fernsehbetreibers durch eine Kommunikationsverbindung (401) verbunden ist, die Datenpakete transportiert, **dadurch gekennzeichnet, dass** das Verfahren die unterschiedlichen Schritte umfasst; bestehend aus:
- Bestimmen (410) der Qualität der mit dem Dekodierer (308) verbundenen Verbindung (401);
- Wenn die bestimmte Qualität der betrachteten Verbindung zufriedenstellend ist, Deaktivieren (361) wenigstens einer Kontrollfunktion (360) der Übertragungsintegrität innerhalb des Fernsehdekodierers (308) durch eine Operation, die im Ausgaben (412) eines Deaktivierungsbefehls ausgehend von dem betrachteten Portal (400) des Operators an eine spezifische Anwendung (361) des Dekodierers (308) besteht.

2. Verfahren gemäß dem voranstehenden Anspruch, **dadurch gekennzeichnet, dass** wenigstens eine deaktivierte Kontrollfunktion (360) der Übertragungsintegrität einer Funktion zum Umsetzen des Systems FEC zugeordnet ist.

3. Verfahren gemäß wenigstens einem der voranstehenden Ansprüche, **dadurch gekennzeichnet, dass** die wenigstens eine deaktivierte Kontrollfunktion (360) der Integrität eine Funktion ist, die einem Rückübertragungsmechanismus zugeordnet ist, oder eine Funktion, die dem Korrektursystem per CRC zugeordnet ist.

4. Verfahren gemäß wenigstens einem der voranstehenden Ansprüche, **dadurch gekennzeichnet, dass** der Bestimmungsschritt der Qualität der an den Dekodierer (308) angeschlossenen Verbindung (401) die unterschiedlichen Operationen umfasst, bestehend aus:
- Ablesen wenigstens eines Dienstqualitäts-Parameters (350), der in dem Modem (305) oder in dem Dekodierer (308) gespeichert ist;
- Vergleichen (411) des wenigstens einen Dienstqualitäts-Parameters (350) mit einem Referenz-Schwellenwert (421);
- wenn der wenigstens eine Dienstqualitäts-Parameter (350) größer ist als der genannte Referenz-Schwellenwert (421), Deaktivieren (361) der wenigstens einen Kontrollfunktion (360) der Übertragungsintegrität.

5. Verfahren gemäß dem voranstehenden Anspruch, **dadurch gekennzeichnet, dass** der wenigstens eine Dienstqualitäts-Parameter (350) ein Parameter aus den folgenden Parametern ist:
- Verlustrate an Paketen;
- Indikator der Bandbreite;
- Indikator der Durchsatzqualität;
- Indikator der audiovisuellen Wiedergabe;
- Unterbrechungsindikator für den Empfang der Datenpaketen;
- Indikator der Anzahl von während einer zuvor bestimmten Dauer korrigierten und / oder nicht korrigierten Paketen;
- Indikator der Anzahl der Durchgänge des Dekodierers in einen abgestuften Betriebsmodus während einer zuvor bestimmten Dauer;
- Indikator der vom Dekodierer im Standby verbrachten Zeit;
- Indikator der Anzahl von Reinitialisierungen des Dekodierers.

6. Verfahren gemäß wenigstens einem der voranstehenden Ansprüche, **dadurch gekennzeichnet, dass** der Bestimmungsschritt (410) der Qualität der betrachteten Verbindung (401) bei jedem Austritt des Dekodierers (308) aus dem Standby umgesetzt wird.

7. Verfahren gemäß wenigstens einem der Ansprüche 1 bis 5, **dadurch gekennzeichnet, dass** der Bestimmungsschritt (410) der Qualität der betrachteten Verbindung (401) periodisch umgesetzt wird.

8. Verfahren gemäß wenigstens einem der voranstehenden Ansprüche, **dadurch gekennzeichnet, dass** es die folgenden zusätzlichen Schritte umfasst, bestehend aus:
- Messen (364) einer Deaktivierungsdauer der wenigstens einen Kontrollfunktion der Integrität;
- Vergleichen der gemessenen Dauer mit einer Schwellenwert-Dauer (370);
- Wenn die gemessene Dauer größer ist als die Schwellenwertdauer (370), erneutes Aktivieren (361) der wenigstens einen Kontrollfunktion (360) der Integrität innerhalb des Dekodierers.

9. Verfahren gemäß Anspruch 8, **dadurch gekennzeichnet, dass** die gemessene Deaktivierungsdauer die seit dem letzten Empfang der von dem Dekodierer (308) abgelaufenen Dauer des Deaktivierungsbefehls ist.

10. Verfahren gemäß wenigstens einem der voranstehenden Ansprüche, **dadurch gekennzeichnet, dass** es in Dekodierern (308) vom Typ Dekodierer IP umgesetzt wird.

11. Computerprodukt-Programm, umfassend Anweisungen, um ein Verfahren gemäß einem der Ansprüche 1 bis 10 umzusetzen, wenn es von einem Computer ausgeführt ist.

12. Speicherträger, der von einem Computer lesbar ist, der von einem Computer lesbar ist, auf dem das Computerprogramm-Produkt gemäß Anspruch 11 gespeichert ist.

## Claims

1. Method for optimising a service changing time on a television digital set top box (308), said television digital set top box being linked, via a modem element (305), to a television operator portal (400) by a communication link (401) conveying data packets, **characterised in that** the method comprises the different steps of:
- determining (410) the quality of the link (401) linked to the set top box (308);
- if the determined quality of the link in question is satisfactory, deactivating (361), at the television set top box (308), at least one transmission integrity monitoring function (360), via an operation consisting in issuing (412) a deactivating command from the operator portal (400) in question to a specific application (361) of the set top box (308).

2. Method according to the preceding claim **characterised in that** the at least one deactivated transmission integrity monitoring function (360) is a function associated with the implementation of the FEC system.

3. Method according to at least one of the preceding claims **characterised in that** the at least one deactivated transmission integrity monitoring function (360) is a function associated with a retransmission mechanism, or a function associated with the CRC correction system.

4. Method according to at least one of the preceding claims **characterised in that** the step of determining the quality of the link (401) linked to the set top box (308) comprises the different operations consisting in:
- reading at least one service quality parameter (350) stored in the modem (305) or in the set top box (308);
- comparer (411) the at least one service quality parameter (350) with a reference threshold value (421);
- if the at least one service quality parameter (350) is greater than said reference threshold value (421), deactivating (361) the at least one transmission integrity monitoring function (360).

5. Method according to the preceding claim **characterised in that** the at least one service quality parameter (350) is a parameter from among the following parameters:
- packet loss rate;
- bandwidth indicator;
- speed quality indicator;
- audiovisual rendering indicator;
- discontinuity indicator in the reception of data packets;
- indicator of the number of packets corrected and/or not corrected during a predetermined period of time;
- indicator of the number of switches of the set top box to a degraded operation mode, during a predetermined period of time;
- indicator of the time spent on stand-by by the set top box;
- indicator of the number of resets of the set top box.

6. Method according to at least one of the preceding claims **characterised in that** the step of determining (410) the quality of the link (401) in question is implemented each time the set top box (308) comes out of stand-by mode.

7. Method according to at least one of claims 1 to 5 **characterised in that** the step of determining (410) the quality of the link (401) in question is implemented periodically.

8. Method according to at least one of the preceding claims **characterised in that** it comprises the additional steps consisting in:
- measuring (364) a duration of deactivation of the at least one integrity monitoring function;
- comparing the measured duration to a threshold duration (370);
- if the measured duration is greater than the threshold duration (370), activating (361) again, in the set top box, the at least one integrity monitoring function (360).

9. Method according to claim 8 **characterised in that** the duration of the deactivation measured is the duration elapsed since the last reception, by the set top box (308), of the deactivation command.

10. Method according to at least one of the preceding claims **characterised in that** it is implemented in set top boxes (308) of the IP set top box type.

11. Computer program product comprising instructions for implementing a method according to one of claims 1 to 10, when it is executed by a computer.

12. Recording support that can be read by a computer, on which is recorded the computer program product according to claim 11.
